(19) Europäisches Patentamt
European Patent Office
Office européen des brevets

(11) **EP 3 931 438 B1**

(12) **EUROPÄISCHE PATENTSCHRIFT**

(45) Veröffentlichungstag und Bekanntmachung des Hinweises auf die Patenterteilung:
**10.04.2024   Patentblatt 2024/15**

(21) Anmeldenummer: **20708076.3**

(22) Anmeldetag: **28.02.2020**

(51) Internationale Patentklassifikation (IPC):
**F03D 7/02** (2006.01)          **F03D 7/04** (2006.01)

(52) Gemeinsame Patentklassifikation (CPC):
**F03D 7/0296; F03D 7/0276; F03D 7/043;**
F05B 2260/821; F05B 2270/32; F05B 2270/334;
Y02E 10/72

(86) Internationale Anmeldenummer:
**PCT/EP2020/055313**

(87) Internationale Veröffentlichungsnummer:
**WO 2020/178182 (10.09.2020 Gazette 2020/37)**

(54) **VERFAHREN ZUM BETREIBEN EINER WINDENERGIEANLAGE, REGLERSTRUKTUR, WINDENERGIEANLAGE UND WINDPARK**

METHOD FOR OPERATING A WIND TURBINE, CONTROLLER STRUCTURE, WIND TURBINE AND WIND FARM

PROCÉDÉ SERVANT À FAIRE FONCTIONNER UNE ÉOLIENNE, STRUCTURE DE RÉGULATION, ÉOLIENNE ET PARC ÉOLIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2019   DE 102019105296**

(43) Veröffentlichungstag der Anmeldung:
**05.01.2022   Patentblatt 2022/01**

(73) Patentinhaber: **Wobben Properties GmbH**
**26607 Aurich (DE)**

(72) Erfinder: **VON ASWEGE, Enno**
**26629 Großefehn (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
**EP-A1- 3 276 166          EP-A2- 2 679 810**
**WO-A1-90/07823          WO-A1-2008/023990**
**WO-A1-2010/023285          US-A1- 2009 250 932**
**US-A1- 2011 316 277**

**Beschreibung**

Die vorliegende Erfindung betrifft ein Verfahren zum Betreiben einer Windenergieanlage, eine Reglerstruktur, eine Windenergieanlage und einen Windpark.

Windenergieanlagen sind bekannt. Zum Betrieb derartiger Anlagen sind verschiedene Konzepte oder Regelungsstrategien vorgeschlagen, eine davon ist eine sogenannte Drehzahlregelung, die insbesondere das Ziel verfolgt, durch Regelung der Drehzahl des Rotors der Windenergieanlage eine optimierte Leistung zu erzielen, ohne dabei überhöhte Lasten oder Drehzahlen zu erzeugen.

Es ist bekannt, dass Turmschwingungen unerwünscht oder sogar gefährlich für die strukturelle Integrität und die Lasten von Windenergieanlagen sind, so dass aktive Systeme zur Dämpfung von Turmschwingungen entwickelt wurden. Eine Turmschwingung führt zu einer Verfälschung der von der Windenergieanlage "erfahrenen" Windgeschwindigkeit. Wenn der Turm nach vorne schwingt, erhöht sich die relative Windgeschwindigkeit um die Komponente der Turmkopfgeschwindigkeit (und umgekehrt).

Eine Schwingung des Turms nach vorne führt deshalb zu einer Anhebung der aerodynamischen Rotorleistung (mehr Wind) und damit der Drehzahl. In Folge würde die Drehzahlregelung die Rotorblätter etwas zurückpitchen, was allerdings den Turm entlastet und somit die Turmschwingung verstärkt. Man könnte im Zusammenhang der Turmkopfgeschwindigkeit auch von einer (messbaren) Störgröße sprechen. Bekannte Drehzahlregelungen sind durch die entstehenden Turmschwingungen gestört, so dass die Drehzahlregelungen selbst Quellen einer (weiteren) Anregung von Turmschwingungen darstellen.

DE 33 08 564 A1 betrifft das Dämpfen der Primärbiegemode eines Turms einer Windenergieanlage, wobei ein Blatteinstellwinkelreferenzsignal zum Beeinflussen des Einstellwinkels der Turbinenblätter über eine Blattverstellvorrichtung zum Konstanthalten der Leistung durch eine Regeleinrichtung geliefert wird. Dies erfolgt durch Erzeugen des Blatteinstellwinkelreferenzsignals als Integral der Summe eines Drehmoment/Leistung regelnden Blatteinstellwinkelreferenzgeschwindigkeitssignals mit einem geschätzten Beschleunigungssignal, das durch Filtern des Blatteinstellwinkelreferenzsignals erzeugt wird. Das Dokument beschreibt daher einen Ansatz, wie Turmbewegungen berechnet werden können, ohne dass deren Einfluss auf die Drehzahlregelung zum Tragen kommt.

EP 2 115 299 B1 betrifft die Dämpfung einer Turmresonanzbewegung bei Windenergieanlagen unter Verwendung von Schätzverfahren, wobei die geschätzten Werte zum Bereitstellen einer Korrektur des kollektiven Pitchwinkels herangezogen werden.

EP 2 063 110 B1 betrifft ein Verfahren zur Dämpfung von Turmvibrationen einer Windenergieanlage, die Rotorblätter, eine Pitchsteuerung und ein Aktuatorsystem zum Einstellen des Pitchwinkels der Rotorblätter umfasst, wobei das Verfahren die Schritte aufweist: Bereitstellen eines Geschwindigkeitsreferenzwertes für die Rotorgeschwindigkeit; Bereitstellen eines Rotorgeschwindigkeitswertes, der die Geschwindigkeit des Rotors anzeigt; und Herstellen eines Modifikationswertes, der eine zum Berücksichtigen der Turmvibrationen an dem Rotorgeschwindigkeitswert vorzunehmende Korrekurwert angibt; Verwenden des Modifikationswertes um den Geschwindigkeitsreferenzwert zu verändern, um einen veränderten Geschwindigkeitsreferenzwert zu erhalten; Bestimmen eines Pitchreferenzwertes, der einem durch das Aktuatorsystem einzustellenden Pitchwinkel enspricht, auf Grundlage wenigstens des Unterschiedes zwischen dem veränderten Geschwindigkeitsreferenzwert und dem Rotorgeschwindigkeitswertes; Steuern des Pitchwinkels der Rotorblätter gemäß dem Pitchreferenzwert.

EP 2 063 110 B1 schätzt demnach aus einer abgeleiteten Bewegung und Position des Turmes die Turmbewegung ab und bestimmt daraus eine Korrektur des Referenzwertes der Rotorgeschwindigkeit bzw. Drehzahl. Zum Entkoppeln der Einflüsse der Turmschwingung von der Drehzahlregelung müsste allerdings ein Verstärkungsfaktor des Verstärkers 25, vgl. Fig. 4 dieses Dokumentes, optimiert werden, was nichttrivial ist und durch dieses Dokument auch nicht beschrieben wird. Während das Verfahren daher aktiv dazu dient, die Turmschwingungen zu dämpfen, so kann es nicht leisten, dass überhaupt bereits die Entstehung der Turmschwingung durch die Drehzahlregelung vermieden wird, da keine Entkopplung dieser Störgröße von der Drehzahlregelung als solcher erreicht wird.

Das deutsche Patent- und Markenamt hat in der Prioritätsanmeldung zu vorliegender Anmeldung folgenden Stand der Technik recherchiert: DE 10 2017 105 165 A1, US 2009/0 250 932 A1, US 2010/ 0 063 769 A1, US 2011/ 0 316 277 A1, US 2012/ 0 056 427 A1, US 2014/ 0 297 052 A1, US 2015/ 0 354 532 A1.

EP 2 679 810 A2 offenbart Systeme und Verfahren zum Reduzieren von Turmschwingungen in einer Windkraftanlage. Das Verfahren umfasst das Erhalten einer Rotorgeschwindigkeit. Ferner beinhaltet das Verfahren das Erhalten eines oder mehrerer Parameter, die einem Turm der Windkraftanlage zugeordnet sind. Ferner umfasst das Verfahren das Bestimmen einer modifizierten Rotorgeschwindigkeit basierend auf dem einen oder den mehreren Parametern. Darüber hinaus umfasst das Verfahren das Bestimmen eines ersten Anstellwinkels basierend auf der modifizierten Rotorgeschwindigkeit. Zusätzlich beinhaltet das Verfahren das Anstellen eines oder mehrerer Blätter der Windkraftanlage auf Grundlage des ersten Anstellwinkels, um die Turmschwingungen zu reduzieren.

WO 2008/023990 A1 offenbart ein Verfahren zur Steuerung einer Windenergieanlage zur Dämpfung von Turmschwingungen, insbesondere eine schwimmfähige Windenergieanlage mit einem Auftriebskörper, einem über dem Auftriebskörper angeordneten Turm, einem auf dem Turm gelagerten, in Bezug auf die Windrichtung drehbaren Generator und ausgestattet mit einer Windkraftanlage und einer Ankerleinenanordnung, die mit Ankern oder Fundamenten auf dem Meeresboden verbunden ist. Die Turmschwingungen werden gedämpft, indem die Regelung mit dem Blattwinkelregler im konstanten Leistungs- oder Drehzahlbereich der Windkraftanlage durchgeführt wird, indem die Rotorgeschwindigkeit (die der Eingang des Blattwinkelreglers ist) in einem Schätzer für die Windkraftanlage geschätzt wird. Die Eingabe für den Windturbinenschätzer ist der geschätzte ankommende Wind, so dass die Turmbewegungen für die Blattwinkelsteuerung nicht sichtbar sind. Somit wird keine negative Dämpfung in das System eingeführt und die Turmschwingungen werden zweckmäßigerweise gedämpft, während es auch weniger Schwankungen des Blattwinkels, des Schubs auf den Rotor und der zugeführten Leistung gibt.

Vor diesem Hintergrund war es eine Aufgabe der vorliegenden Erfindung, bekannte Verfahren zum Betreiben von Windenergieanlagen, insbesondere Drehzahlregelungen, sowie zugehörige Reglerstrukturen und Windenergieanlagen dahingehend zu verbessern, dass die Anregung von Turmschwingungen durch die Drehzahlregelung vermieden, jedenfalls verringert wird. Es war ebenso eine Aufgabe der vorliegenden Erfindung, eine unnötige Störung einer Drehzahlregelung durch den Turm der Windenergieanlage zu vermeiden, insbesondere unnötige Pitchbewegungen zu verringern.

Gemäß einem ersten Aspekt wird die Aufgabe erfindungsgemäß durch ein Verfahren zum Betreiben einer Windenergieanlage gelöst, wobei die Windenergieanlage einen Turm mit darauf wirkenden äußeren Turmlasten und einen aerodynamischen Rotor mit in ihrem Pitchwinkel verstellbaren Rotorblättern, der einen Rotorschub erzeugt, aufweist. Das Verfahren umfasst die folgenden Schritte: a) Bestimmen einer Geschwindigkeit eines Turmkopfes des Turms und/oder einer Gondel der Windenergieanlage, b) Bestimmen einer absoluten Windgeschwindigkeit im Bereich der Windenergieanlage, c) Bestimmen einer reinen Windleistung auf den Rotor auf Grundlage der absoluten Windgeschwindigkeit; d) Bestimmen einer scheinbaren Windleistung auf den Rotor auf Grundlage der Geschwindigkeit des Turmkopfes und/oder der Gondel; e) Bestimmen einer aerodynamischen Turmschwingungsleistung auf Grundlage einer Differenz der scheinbaren Windleistung und der reinen Windleistung; und f) Regeln der Windenergieanlage unter Verwendung der aerodynamischen Turmschwingungsleistung.

Indem die aerodynamische Turmschwingungsleistung aus scheinbarer Windleistung und reiner Windleistung bestimmt wird, lässt sich die Windenergieanlage präziser und schneller regeln. Insbesondere kann dadurch die Störgröße für die Regelung entkoppelt werden, was in der Folge dazu führt, dass die Regelung, insbesondere die Drehzahlregelung der Windenergieanlage, die Turmschwingungen gar nicht erst anregt. Demnach verliert das typischerweise notwendige Dämpfen der Turmschwingungen erfindungsgemäß bereits deshalb an Bedeutung, da die Turmschwindungen gar nicht erst angeregt werden.

Die Geschwindigkeit des Turmkopfes beziehungsweise der Gondel kann auf bekannte, geeignete Weise geschätzt, bestimmt oder gemessen werden. So können hierfür beispielsweise Beschleunigungssensoren in der Gondel bzw. dem Turmkopf integriert sein oder auch Dehnungsmessstreifen an beliebigen Stellen des Turms vorgesehen sein.

Die Turmkopf- bzw. Gondelgeschwindigkeit umfasst vorzugsweise die Geschwindigkeitskomponente in Axialrichtung bzw. Längsrichtung der Gondel.

Die absolute Windgeschwindigkeit wird vorzugsweise aus einer scheinbaren Windgeschwindigkeit ermittelt, die durch geeignete, bekannte Weisen geschätzt, bestimmt oder gemessen wird. Hierzu können beispielsweise Anemometer oder Windschätzer, die den Wind aus Betriebsparametern der Windenergieanlage, insbesondere aus Lastern und/oder Leistungen, schätzen, herangezogen werden.

Die absolute Windgeschwindigkeit wird demnach daher erhalten, dass die scheinbare Windgeschwindigkeit mit der Geschwindigkeit, mit der sich das Bezugssystem, insbesondere der Turmkopf der Windenergieanlage, bewegt, kompensiert wird.

Sodann wird einer scheinbaren Windleistung auf den Rotor auf Grundlage der Geschwindigkeit des Turmkopfes und/oder der Gondel sowie der absoluten Windgeschwindigkeit bestimmt.

In einem anderen Aspekt wird die Aufgabe erfindungsgemäß durch ein Verfahren zum Betreiben einer Windenergieanlage gelöst, wobei die Windenergieanlage einen Turm mit darauf wirkenden äußeren Turmlasten und einen aerodynamischen Rotor mit in ihrem Pitchwinkel verstellbaren Rotorblättern, der einen Rotorschub erzeugt, aufweist. Das Verfahren umfasst die folgenden Schritte: a) Bestimmen einer Geschwindigkeit eines Turmkopfes des Turms und/oder einer Gondel der Windenergieanlage, b) Bestimmen einer absoluten Windgeschwindigkeit im Bereich der Windenergieanlage, c) Bestimmen eines reinen Windmoments auf den Rotor auf Grundlage der absoluten Windgeschwindigkeit; d) Bestimmen eines scheinbaren Windmoments auf den Rotor auf Grundlage der Geschwindigkeit des Turmkopfes; e) Bestimmen eines aerodynamischen Turmschwingungsmoments auf Grundlage einer Differenz des scheinbaren Windmoments und des reinen Windmoments; und f) Regeln der Windenergieanlage unter Verwendung des aerodynamischen Turmschwingungsmoments.

Das Verfahren und die damit verbundenen Vorteile sind weitestgehend analog zu dem auf Turmschwingungsleistungen bezogenen ersten Aspekt, wobei anstelle der Leistungen korrespondierende Momente herangezogen werden. Dem Fachmann ist die Umrechnung zwischen Momenten und Leistungen mit im Wesentlichen der Einbeziehung der Drehzahl bekannt. Nachfolgend sollen demnach alle Ausgestaltungen und Vorteile, die mit Bezug auf entweder eine Leistung oder ein Drehmoment beschrieben werden, analog auch auf korrespondierende Momente bzw. Leistungen Anwendung finden.

In einer bevorzugten Ausgestaltung umfasst das Regeln der Windenergieanlage ein Korrigieren einer Rotorbeschleunigung, wobei das Verfahren ferner aufweist: g) Korrigieren der Rotorbeschleunigung unter Verwendung der aerodynamischen Turmschwingungsleistung bzw. des aerodynamischen Turmschwingungsmoments.

In dieser Ausgestaltung ist demnach im Ergebnis eine bekannte Drehzahlregelung, die als Korrektiv die Rotorbeschleunigung korrigiert, durch das erfindungsgemäße Verfahren zum Regeln der Windenergieanlage implementiert.

In einer bevorzugten Ausgestaltung umfasst das Regeln der Windenergieanlage ein Korrigieren einer Leistung des Rotors mit der aerodynamischen Turmschwingungsleistung bzw. des aerodynamischen Turmschwingungsmoments und ein Regeln der Windenergieanlage unter Verwendung der korrigierten Leistung.

In einer bevorzugten Ausgestaltung erfolgt der Schritt des Regelns der Windenergieanlage mittels einer Leistungsregelung, einer Drehmomentregelung und/oder einer Drehzahlregelung der Windenergieanlage, insbesondere durch Blattwinkelverstellung und/oder durch eine Vorgabe des Generatormoments.

In einer bevorzugten Ausgestaltung ist die absolute Windgeschwindigkeit von der Geschwindigkeit des Turmkopfes unbeeinflusst. Hierbei kann die Bestimmung, beispielsweise durch Messung, der absoluten Windgeschwindigkeit bereits unmittelbar ohne Beitrag der Turmkopfgeschwindigkeit erfolgen oder nachträglich um die Geschwindigkeit des Turmkopfes korrigiert werden.

In einer bevorzugten Ausgestaltung entspricht die absolute Windgeschwindigkeit einer im Bereich der Windenergieanlage bestimmten Windgeschwindigkeit abzüglich der Geschwindigkeit des Turmkopfes und/oder der Gondel der Windenergieanlage. Die im Bereich der Windenergieanlage bestimmte Windgeschwindigkeit kann hierbei auf bekannte Weisen gemessen, geschätzt oder abgeleitet werden, bzw. als eine Kombination daraus bestimmt werden.

In einer bevorzugten Ausgestaltung umfasst die Leistung eine Beschleunigungsleistung des Rotors oder eine gesamte aerodynamische Leistung des Rotors bzw. das Moment ein Beschleunigungsmoment des Rotors oder ein gesamtes aerodynamisches Moment des Rotors. Die Beschleunigungsleistung bzw. das Beschleunigungsmoment kann durch geeignete, bekannte Verfahren geschätzt, bestimmt und/oder gemessen werden.

In einer bevorzugten Ausgestaltung wird die Leistung bzw. das Moment des Rotors um die bzw. das mit einem Faktor multiplizierte aerodynamische Turmschwingungsleistung bzw. Turmschwingungsmoment korrigiert, wobei der Multiplikationsfaktor zwischen 0,5 und 5, vorzugsweise zwischen 1 und 4 beträgt, wobei die Grenzen eingeschlossen sind.

Eine optimal entkoppelte Störgröße ist bei einem Multiplikationsfaktor von 1 erreicht, bei einem Wert größer 1 wird die Turmschwingung aktiv gedämpft.

In einem weiteren Aspekt wird die Aufgabe durch einen Regler/ eine Reglerstruktur für eine Windenergieanlage mit einem aerodynamischen Rotor mit wenigstens einem Rotorblatt gelöst. Die Reglerstruktur ist dazu ausgebildet, eine Drehzahl des Rotors der Windenergieanlage zu regeln, wobei die Reglerstruktur dazu ausgebildet ist, ein Eingangssignal zu erhalten, das eine Drehzahländerung, eine Drehzahlbeschleunigung, eine Funktion der Drehzahländerung und/oder eine Funktion der Drehzahlbeschleunigung umfasst, wobei die Reglerstruktur dazu ausgebildet ist, die Windenergieanlage gemäß einem erfindungsgemäßen Verfahren zu betreiben.

In einer bevorzugten Ausgestaltung ist die Reglerstruktur als Kaskadenregelung ausgebildet und weist einen äußeren Regelkreis und einen inneren Regelkreis auf, wobei der innere Regelkreis das Eingangssignal erhält.

Die Kaskadenregelung hat den Vorteil, dass sie eine wesentlich schnellere Regelung als die herkömmliche Drehzahlregelung ermöglicht, da die Drehzahl eine vergleichsweise träge Regelgröße darstellt. Indem ein innerer Regelkreis mit einer Führungsgröße vorgesehen ist, die eine schnellere Einregelung ermöglicht, können die auf die Windenergieanlage wirkenden Lasten reduziert werden.

In einer bevorzugten Ausgestaltung ist eine Regelgröße des äußeren Regelkreises als Führungsgröße des inneren Regelkreises vorgesehen und der äußere Regelkreis ist dazu ausgebildet, eine Begrenzung der Regelgröße, insbesondere der Drehzahländerung, der Drehzahlbeschleunigung, der Funktion der Drehzahländerung und/oder der Funktion der Drehzahlbeschleunigung, vorzugeben.

Durch diese Ausgestaltung ist eine Begrenzung der maximalen Rotorbeschleunigung und damit der wirkenden Lasten möglich.

In einer bevorzugten Ausgestaltung umfasst das Eingangssignal des inneren Regelkreises eine Rotorbeschleunigungsleistung oder ein Rotorbeschleunigungsmoment, wobei die Rotorbeschleunigungsleistung oder das Rotorbeschleunigungsmoment den Teil einer von dem Rotor der Windenergieanlage aufgenommenen Leistung bzw. Drehmoment beschreibt, der in eine Beschleunigung des Rotors umgewandelt wird, wobei die Rotorbeschleunigungsleistung oder das Rotorbeschleunigungsmoment mittels des erfindungsgemäßen Verfahrens korrigiert wird.

In einer bevorzugten Ausgestaltung umfasst das Eingangssignal des inneren Regelkreises eine von dem Rotor aufgenommene aerodynamische Leistung, wobei die von dem Rotor aufgenommene aerodynamische Leistung eine Summe aus einer Rotorbeschleunigungsleistung und wenigstens einer von einerweiteren Komponente der Windenergieanlage aufgenommenen Leistung, insbesondere eine Generatorleistung eines Generators der Windenergieanlage, umfasst, wobei die Rotorbeschleunigungsleistung den Teil einer von dem Rotor der Windenergieanlage aufgenommenen Leistung beschreibt, der in eine Beschleunigung des Rotors umgewandelt wird.

In einer bevorzugten Ausgestaltung bestimmt der äußere Regelkreis eine Abweichung einer Ist-Drehzahl des Rotors von einer Soll-Drehzahl des Rotors als Regelabweichung.

In einer bevorzugten Ausgestaltung erzeugt der äußere Regelkreis einen Sollwert einer Leistung oder eines Momentes als Stellgröße, wobei der Sollwert der Leistung insbesondere nach oben und unten begrenzt unsymmetrisch begrenzt ist, wobei die Leistung eine Rotorbeschleunigungsleistung umfasst, wobei die Rotorbeschleunigungsleistung auf eine Nennleistung der Windenergieanlage, insbesondere auf höchstens 40%, vorzugsweise höchstens 30% und besonders bevorzugt höchstens 20% der Nennleistung der Windenergieanlage, begrenzt ist.

In einer bevorzugten Ausgestaltung umfasst die Leistung eine aerodynamische Rotorleistung, wobei die aerodynamische Rotorleistung auf das doppelte einer Nennleistung der Windenergieanlage, insbesondere auf höchstens 120% der Nennleistung der Windenergieanlage, begrenzt ist.

In einer bevorzugten Ausgestaltung erzeugt der innere Regelkreis als Stellgröße einen Pitchwinkel oder eine Änderungsrate eines Pitchwinkels wenigstens eines der Rotorblätter des Rotors, wobei der Sollwert der Änderungsrate des Pitchwinkels auf einen Wert zwischen -20°/s und +20°/s, vorzugsweise zwischen -10°/s und +10°/s und insbesondere zwischen -5°/s und +5°/s begrenzt wird.

In einer bevorzugten Ausgestaltung weist der äußere Regelkreis und/oder der innere Regelkreis einen P- und/oder I-Regler auf. Die Wahl der Regler hängt stark mit der Wahl der Stellgröße zusammen. Bei Reglerstrukturen mit Pitchraten als Stellgröße kommen bevorzugt P-Regler, bei Reglerstrukturen mit Pitchwinkeln als Stellgröße bevorzugt I-Regler zum Tragen.

In einer bevorzugten Ausgestaltung umfasst die Reglerstruktur ferner eine Berechnungskomponente, die dazu eingerichtet ist, aus einer Änderung einer gemessenen Ist-Drehzahl der Windenergieanlage unter Verwendung der Rotorträgheit eine Rotorbeschleunigungsleistung zu bestimmen.

In einer bevorzugten Ausgestaltung umfasst die Reglerstruktur ferner eine Vorsteuerung zum Vorsteuern eines Pitchwinkels wenigstens eines Rotorblattes, die dazu eingerichtet ist, parallel zu dem inneren Regelkreis einen Pitchwinkel und/oder eine Änderungsrate des Pitchwinkels vorzugeben.

Für den Sollwert der aerodynmiaschen Leistung wird hierfür vorzugsweise ein Soll-Pitchwinkel bestimmt, der zusammen mit dem Ist-Pitchwinkel zu einer Vorsteuerpitchrate verrechnet wird. Beide Pitchraten, d.h. die Pitchrate des Drehzahlreglers und die Pitchrate der Vorsteuerung, laufen parallel und werden überlagert, wobei diese Umsetzung dann eine Frage der Auslegung der Windenergieanlage ist.

Die Aufgabe wird erfindungsgemäß ferner durch eine Windenergieanlage mit einer erfindungsgemäßen Reglerstruktur gelöst.

Die Aufgabe wird erfindungsgemäß ferner durch einen Windpark mit mehreren erfindungsgemäßen Windenergieanlagen gelöst.

Die bevorzugten Ausgestaltungen des erfindungsgemäßen Verfahrens und der erfindungsgemäßen Reglerstruktur können beliebig unter Erreichung der jeweils damit verbundenen Vorteile kombiniert und ausgetauscht werden und ebenso zur Ausgestaltung der erfindungsgemäßen Windenergieanlage und des erfindungsgemäßen Windparks verwendet werden.

Weitere Vorteile und beispielhafte Ausführungen werden nachfolgend mit Verweis auf die beigefügten Figuren beschrieben. Hierbei zeigen:

Fig. 1    schematisch und exemplarisch eine Windenergieanlage,

Fig. 2    schematisch und exemplarisch eine Reglerstruktur für Drehzahlregler von Windenergieanlagen,

Fig. 3    schematisch und exemplarisch eine verbesserte Reglerstruktur,

Fig. 4    schematisch und exemplarisch eine Reglerstruktur mit Korrektur,

Fig. 5    schematisch und exemplarisch einen Windschätzer und

Fig. 6    schematisch und exemplarisch ein Flusdiagramm eines Verfahrens zum Betreiben einer Windenergieanlage.

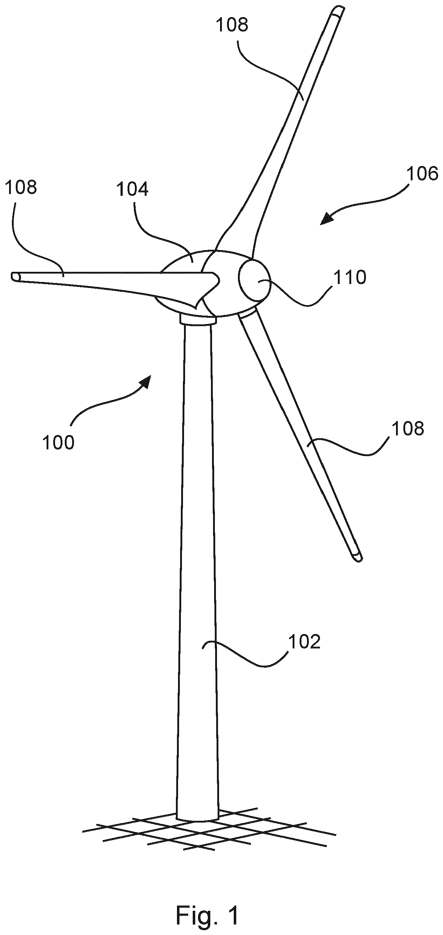

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist.

Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Durch den von dem aerodynamischen Rotor 106 erzeugten Schub wird insbesondere der Turm 102 in Schwingung versetzt. Eine Hauptbewegungsrichtung der Turmschwingung ist in Richtung des eintreffenden Windes bzw. der Azimuteinstellung der Gondel 104. Durch die Schwingung des Turmes 102 wirken auf den Turm 102 nicht zu vernachlässigende Lasten. Diese Lasten sind für die Auslegung des Turms 102 von entscheidender Bedeutung.

Reglerstrukturen zum Betrieb von Windenergieanlagen sind bekannt. Am weitesten verbreitet sind sogenannte pitchgesteuerte Windenergieanlagen, bei denen die Rotorblätter des Rotors der Windenergieanlage um ihre Längsachse, die sogenannte Pitchachse, verstellbar sind. Durch die Veränderung des Pitchwinkels wird eine aerodynamische Leistung der Rotorblätter verändert, wodurch eine Beschränkung der Leistung auf Nennleistung bei Erreichen des Nennwindes ermöglicht wird.

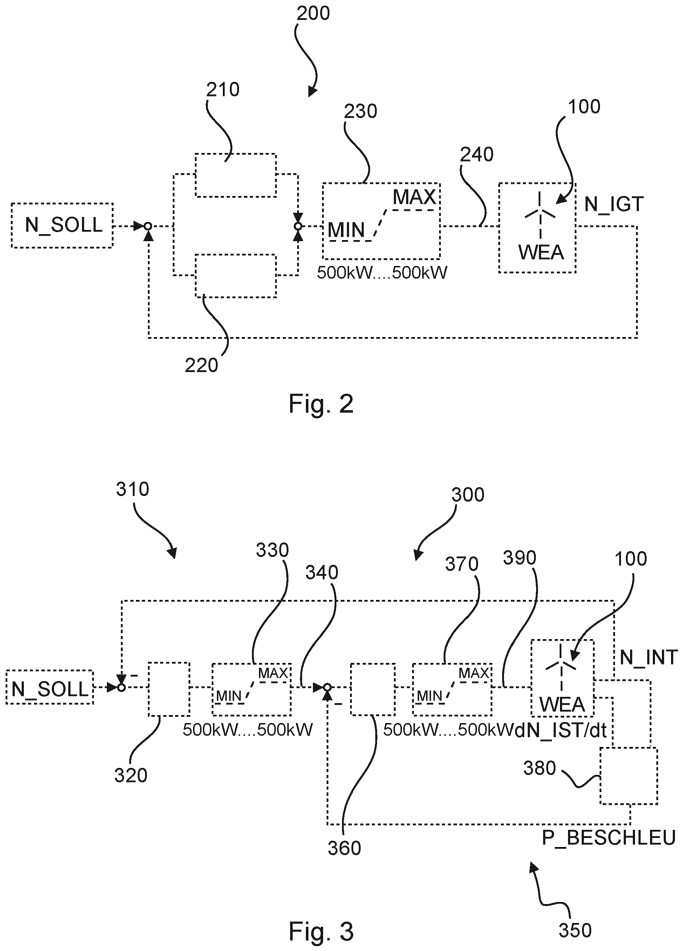

Hierzu ist es bekannt, sogenannte Drehzahlregler, wie sie schematisch in Fig. 2 gezeigt sind, vorzusehen, um eine Solldrehzahl $N_{Soll}$ in etwa einzuhalten. Der Drehzahlregler 200 ist dazu ausgebildet, die Solldrehzahl $N_{Soll}$ als Führungsgröße nach Möglichkeit einzuregeln, wobei eine von der Windenergieanlage 100 gemessene Ist-Drehzahl $N_{Ist}$ zurückgeführt wird und die Abweichung mittels eines P-Reglers 210 und eines D-Reglers 220 in eine einzustellende Pitchrate umgesetzt wird. Die Pitchrate wird durch einen Pitchratenbegrenzer 230 begrenzt auf eine Sollpitchrate 240 eingestellt, die dann zum Betrieb der Windenergieanlage 100 verwendet wird.

Die Qualität der Regelung der Drehzahl beeinflusst unmittelbar die Schnittlasten wichtiger Komponenten der Windenergieanlage, wie beispielsweise des Turms und der Rotorblätter.

Fig. 3 zeigt schematisch und exemplarisch eine verbesserte Reglerstruktur 300 für eine Windenergieanlage 100, wie sie beispielsweise in Fig. 1 gezeigt ist. Die Reglerstruktur 300 ist als Kaskadenregelung ausgebildet und weist einen äußeren Regelkreis 310 und einen inneren Regelkreis 350 auf. Die Reglerstruktur 300 regelt eine Drehzahl in der Windenergieanlage auf einen Sollwert $N_{Soll}$. Hierzu vergleicht der äußere Regelkreis 310 die Ist-Drehzahl $N_{Ist}$ mit der einzuregelnden Solldrehzahl $N_{Soll}$ und erzeugt einen Sollwert 340 der Rotorbeschleunigungsleistung $P_{Beschleu\_Soll}$ mittels eines durch einen Begrenzer 330 begrenzten Signals eines P-Reglers 320.

Der innere Regelkreis 350 regelt nun auf die Rotorbeschleunigungsleistung $P_{Beschleu}$ und versucht demnach, die Rotorblätter der Windenergieanlage 100 derart zu stellen, dass der Rotor 106 möglichst wenig beschleunigt bzw. dem Sollwert 340 der Rotorbeschleunigungsleistung $P_{Beschleu\_Soll}$ folgt. Hierzu wird mittels einer Berechnungseinheit 380 beispielsweise anhand der der zeitlichen Änderung der Rotordrehzahl $dN_{Ist}/dt$ durch eine Berechnungseinheit 380 eine Ist-Beschleunigungsleistung $P_{Beschleu}$ bestimmt. Der Unterscheid zwischen dem Sollwert 340 der Beschleunigungsleistung $P_{Beschleu\_Soll}$ und dem ermittelten Ist-Wert $P_{Beschleu}$ wird mit einem P-Regler 360 in eine einzustellende Pitchrate bzw. einen einzustellenden Blattwinkel der Rotorblätter 108 umgerechnet. Durch einen Begrenzer 370 wird die einzustellende Pitchrate bzw. der einzustellende Pitchwinkel begrenzt, der dann als Sollwert 390 an die Steuerung der Windenergieanlage 100 übergeben wird.

Die Berechnungseinheit 380 greift in diesem Beispiel auf bekannte physikalische Zusammenhänge zwischen dem für den Rotor bekannten Trägheitsmoment $J$, einem Drehmoment $M$ und Drehzahl bzw. daraus abgeleitet Winkelgeschwindigkeit $\omega$ zurück, um aus der Änderung der Drehzahl die Ist-Beschleunigungsleistung $P_{Beschleu}$ zu berechnen.

Anstelle der Rotorbeschleunigungsleistung, wie sie in dem Ausführungsbeispiel beschrieben ist, ist auch möglich, die gesamte vom Rotor aufgenommene aerodynamische Leistung, das heißt unter zusätzlicher Betrachtung zu der vom Generator aufgenommenen Leistung, zu verwenden. Ein Vorteil der Rotorbeschleunigungsleistung ist in vielen Fällen, dass die Größe häufig für in Steuerung von Windenergieanlagen 100 eingesetzte Windschätzer üblicherweise bereits zur Verfügung steht, das heißt eine weitergehende Adaption der Steuerung der Windenergieanlage 100 nicht erforderlich ist. Es genügt demnach lediglich den bekannten Drehzahlregler durch eine erfindungsgemäße Reglerstruktur 300 zu ersetzen. Windschätzer sind beispielsweise auch aus der deutschen Patentveröffentlichung DE 10 2017 105 165 A1 bekannt.

Alternativ zu Leistungen lässt sich die beispielhaft dargelegte Reglerstruktur 300 auch mit Momenten bzw. nach der Zeit abgeleiteten Drehzahlen implementieren. Diese Lösungen sind identisch bis auf den Aspekt, dass die aktuelle Drehzahl in die Beschleunigungsleistung mit eingeht. Es ist allerdings hinreichend bekannt, wie Leistungen in Momente und umgekehrt umzurechnen sind.

Der innere Regelkreis 350 würde für sich alleine genommen mit der Zeit zu starken Drehzahlfehlern führen, so dass der äußere Regelkreis 310, der deutlich langsamer und träger reagiert, einen Sollwert für die Beschleunigungsleistung, der von 0 kW abweichen kann, generiert. Herrscht beispielsweise eine Überdrehzahlsituation vor, das heißt, dass die Ist-Drehzahl $N_{Ist}$ größer als die Solldrehzahl $N_{Soll}$ ist, wäre der Sollwert 340 beispielsweise -200 kW. Der innere Regelkreis 350 würde in diesem Fall eine ungefähre Rotorbeschleunigungsleistung $P_{Beschleu}$ von -200 kW einregeln, so dass der Rotor 106 im Ergebnis Drehzahl abbaut.

Die Begrenzung der Ausgabe des Drehzahlreglers durch die Begrenzer 330 bzw. 370 ermöglicht, dass die maximale Beschleunigungsleistung beschränkt ist, was ebenfalls lastreduzierend wirkt.

Besonders vorteilhaft lässt sich die in Fig. 3 schematisch gezeigte Reglerstruktur 300 um eine parallel zu dem inneren Regelkreis 350 angeordnete Vorsteuerung ergänzen. Die Vorsteuerung kann beispielsweise auf sich ankündigende Böen vorsteuern und demnach in Ergänzung zu der Regelung aktiv in die Pitchwinkelansteuerung eingreifen. Damit können besonders wirksam auftretende Extremlasten, wie sie die Folge von starken Böen sind, vermieden werden.

Zusammengefasst bedeutet die Reglerstruktur gemäß Fig. 3 demnach eine Reglerstruktur 300 zum Regeln der Drehzahl auf einen Drehzahlsollwert $N_{Soll}$. Der inneren Regelkreis 350 erhält die vom Rotor 106 aufgenommene aerodynamische Leistung bzw. die Beschleunigungsleistung oder vereinfacht auch lediglich die Rotorbeschleunigung als Regelgröße, wobei die Pitchrate oder alternativ auch ein Sollrotorblattwinkel als Stellgröße dient. Der äußere Regelkreis 310 regelt als Regelgröße die Rotordrehzahl $N$, wobei ein Sollwert der aerodynamischen Leistung, der Beschleunigungsleistung oder auch der Sollrotorbeschleunigung als Stellgröße für den inneren Regelkreis 350 generiert werden.

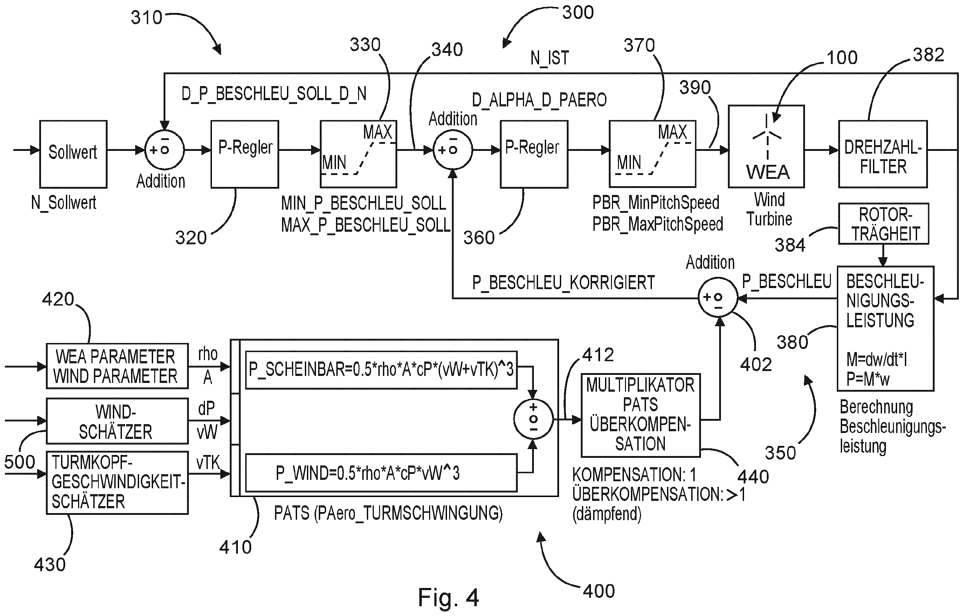

Fig. 4 zeigt schematisch und exemplarisch eine Integration eines erfindungsgemäßen Verfahrens zum Betreiben einer Windenergieanlage 100 in die Reglerstruktur 300, die in Fig. 3 gezeigt ist. Anstelle der in Fig. 3 gezeigten Regelstruktur 300 lassen sich auch sämtliche weitere, bekannte Reglerstrukturen, die insbesondere zum Regeln der Rotordrehzahl N einer Windenergieanlage 100 gebildet sind, durch das erfindungsgemäße Verfahren modifizieren. Wie auch im Zusammenhang mit der Reglerstruktur 300 beschrieben, kann anstelle der dort exemplarisch gezeigten Beschleunigungsleistung bzw. einer anderen Leistung, ebenso Momente bzw. davon abgeleitete Größen herangezogen werden.

Fig. 4 zeigt eine erfindungsgemäße Korrekturvorrichtung 400, die einen Korrekturwert der Beschleunigungsleistung $P_{Beschleu}$ an einer Stelle 402 in den inneren Regelkreis 350 integriert. Das Ergebnis ist demnach ein Korrekturwert 402 der Beschleunigungsleistung $P_{Beschleu}$, wobei das Verfahren ebenso analog auf Momente anwendbar ist.

Der Korrekturwert 402 entspricht physikalisch einer aerodynamischen Leistung, die aus der Schwingung des Turms der Windenergieanlage 100 stammt, genannt aerodynamische Turmschwingungsleistung $P_{AT}$. Zu diesem Zweck wird mittels einer Berechnungseinheit 410 eine scheinbare Windleistung $P_{scheinbar}$ und eine reine Windleistung $P_{wind}$, beispielsweise mittels der folgenden Formeln berechnet:

$$P_{Scheinbar} = 0{,}5 * \rho * A * c_P * (v_W + v_{TK})^3 \qquad (1)$$

$$P_{Wind} = 0{,}5 * \rho * A * c_P * v_w^3 \qquad (2)$$

$$P_{AT} = P_{Scheinbar} - P_{Wind} \qquad (3)$$

Als Eingangsgrößen der Berechnungseinheit 410 dienen zunächst von einer Parametereinheit 420 bereitgestellte Parameter der Windenergieanlage wie eine Luftdichte $\rho$ und eine Rotorfläche A. Ein Turmkopfgeschwindigkeitsschätzung 430 stellt die Turmkopfgeschwindigkeit $v_{TK}$ bereit. Diese wird beispielsweise über einen Bescheinigungssensor, der im Turmkopf oder an der Gondel befestigt ist, bestimmt. Auch andere Verfahren zum Schätzen der Turmkopfgeschwindigkeit, beispielsweise über Dehnungsmeßstreifen, die am Turmfuß oder im Turm angeordnet sind, sind bekannt.

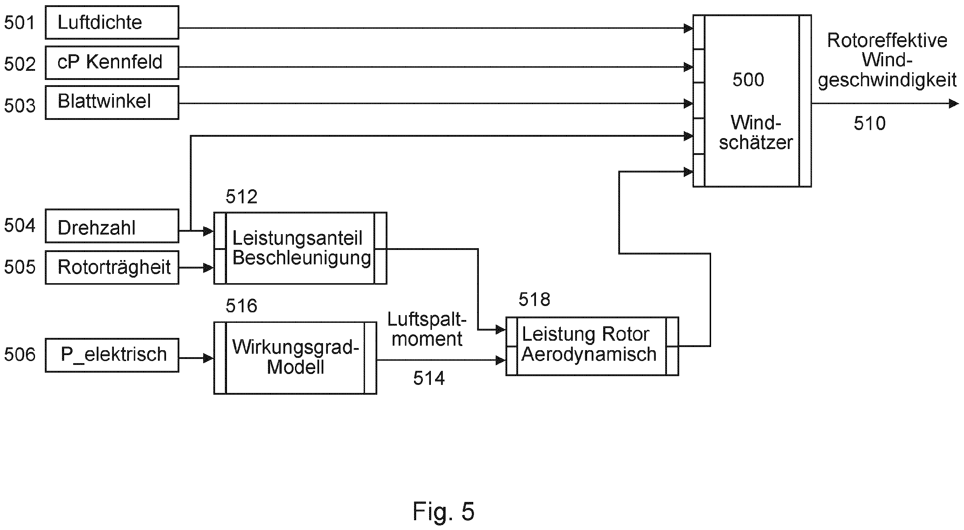

Schließlich wird eine Windgeschwindigkeit $v_w$, die keine Einflüsse der Turmkopfgeschwindigkeit aufweist, durch einen Windschätzer 500 bereitgestellt. Der Windschätzer 500 wird später mit Verweis auf Fig. 5 im Detail beschrieben. Anstelle Windschätzer 500 eignen sich auch andere Verfahren zur Bereitstellung einer Windgeschwindigkeit $v_w$, beispielsweise auf Anemometern oder ähnlichen Meßvorrichtungen basierende Verfahren. Die von dem Windschätzer 500 bereitgestellte Windgeschwindigkeit $v_w$ wird entweder unmittelbar ohne den Einfluss der Turmkopfgeschwindigkeit ermittelt oder, alternativ, wird die Turmkopfgeschwindigkeit $v_{TK}$ nachträglich aus der Windgeschwindigkeit $v_w$ herausgerechnet.

Die Berechnungseinheit 410 bestimmt dann die scheinbare Windleistung $P_{scheinbar}$ aus einer Differenz der Windgeschwindigkeit $v_w$ und der Turmkopfgeschwindigkeit $v_{TK}$. Zusätzlich wird die reine Windleistung $P_{wind}$ ausschließlich aus der Windgeschwindigkeit $v_w$ bestimmt.

Die Differenz beider Leistungen wird von der Berechnungseinheit 410 dann als aerodynamische Turmschwingungsleistung $P_{AT}$. gebildet. Die aerodynamische Turmschwingungsleistung $P_{AT}$. 412 wird an einen Multiplikator 440 übergeben, der je nach Multiplikationsfaktor eine $P_{AT}$-Kompensation (Multiplikationsfaktor gleich 1) oder eine $P_{AT}$-Überkompensation (Modifikationsfaktor größer 1, vorzugsweise zwischen 1 und 4) ermöglicht. Bei der $P_{AT}$-Kompensation handelt sich um eine reine Störgrößenentkopplung, während bei der $P_{AT}$-Überkompensation eine Dämpfung der $P_{AT}$ erfolgt.

Dem inneren Regelkreis 530 wird demnach eine um die Ausgabe des Multiplikator 440 verringerte Beschleunigungsleistung $P_{beschlkorrigiert}$ als Regelgröße zugeführt.

Die Berechnungseinheit 410 und die weiteren Einheiten 420, 430, 500 können in ein und derselben Berechnungsvorrichtung, wie die Berechnungseinheit 380 integriert sein. Beispielsweise kann ein zentraler Rechner der Windenergieanlage 100 sämtliche der Funktionen übernehmen. Alternativ können auch eine, mehrere oder alle der Funktionen auf mehrere Rechnungseinheiten aufgeteilt werden. Auch ist es ebenso möglich, die Berechnungen teilweise oder sogar vollständig auf von der Windenergieanlage 100 entfernt angeordneten Vorrichtungen auszuführen. Beispielsweise können hierfür Server oder ähnliche Strukturen geeignet sein.

Fig. 5 zeigt schematisch und exemplarisch einen Windschätzer 500. Der Windschätzer 500 verarbeitet unterschiedliche Eingangsgrößen, um eine rotoreffektive Windgeschwindigkeit 510 zu erhalten.

Zunächst erhält der Windschätzer 500 eine Luftdichte 501, ein cP-Kennfeld 502 und einen aktuell anliegenden Blattwinkel der Rotorblätter 503.

Als weitere Parameter fließen eine Drehzahl 504, eine Rotorträgheit 505 und die elektrische Leistung 506 in den Windschätzer 500 ein. Die Drehzahl 504 sowie die Rotorträgheit 505 werden in einen Leistungsanteil für die Beschleunigung 512 umgerechnet und mit einem Luftspaltmoment 514, das mittels eines Wirkungsgradmodells 516 aus der elektrischen Leistung 506 abgeleitet wurde, zu der aerodynamischen Leistung des Rotors 518 zusammengefasst.

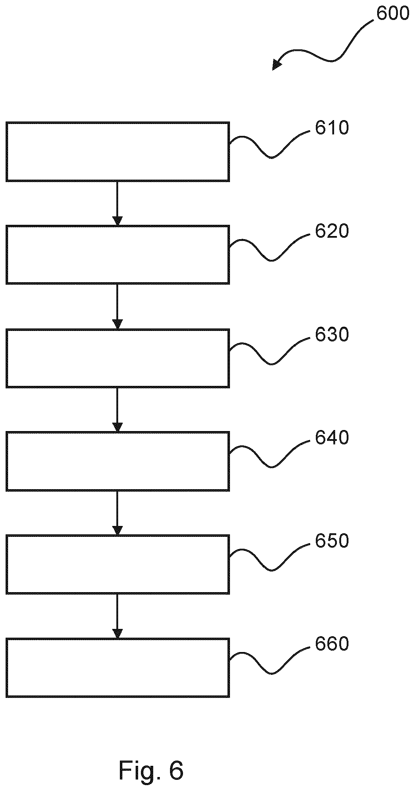

Fig. 6 zeigt schematisch und exemplarisch ein Flussdiagramm eines erfindungsgemäßen Verfahrens 600 zum Betreiben einer Windenergieanlage, wo beispielsweise der Windenergieanlage 100.

Das Verfahren weist zunächst einen Schritt 610 des Bestimmens einer Geschwindigkeit eines Turmkopfes des Turms 102 und/oder einer Gondel der Windenergieanlage 100 auf. Die Geschwindigkeit des Turmkopfes bzw. der Gondel wird beispielsweise geschätzt, bestimmt, und/oder gemessen. Hierfür eignen sich, wie erwähnt, beispielsweise Beschleunigungssensoren, Dehnungsmeßstreifen oder andere Vorrichtungen.

Dann wird in einem Schritt 620 eine absolute Windgeschwindigkeit $v_w$ im Bereich der Windenergieanlage 100 bestimmt. Auch die absolute Windgeschwindigkeit $v_w$ kann geschätzt, beispielsweise mittels eines Windschätzers 500, bestimmt und/oder gemessen werden. Der Einfluss einer Geschwindigkeit des Turmkopfes ist in der absoluten Windgeschwindigkeit $v_w$ nicht enthalten bzw. herausgerechnet.

In einem Schritt 630 wird eine reine Windleistung $P_{wind}$ auf den Rotor 106 auf Grundlage der absoluten Geschwindigkeit bestimmt. Alternativ zu der einen Windleistung $P_{wind}$ ist es ebenso möglich, in diesem Schritt ein reines Windmoment auf der Grundlage der absoluten Windgeschwindigkeit $v_w$ zu bestimmen.

In einem Schritt 640 wird eine scheinbare Windleistung $P_{scheinbar}$ auf den Rotor 106 auf Grundlage der Geschwindigkeit des Turmkopfes bzw. der Gondel bestimmt. Für die scheinbare Windleistung $P_{scheinbar}$ ist insbesondere eine Summe der absoluten Windgeschwindigkeit $v_w$ und der Turmkopfgeschwindigkeit $v_{TK}$ von Relevanz. Abgesehen davon ist die Berechnung der reinen Windleistung $P_{wind}$ und der scheinbaren Windleistung $P_{scheinbar}$ formelmäßig analog. Demnach kann auch in diesem Schritt anstelle einer Leistung auf gleiche Weise das korrespondierende Moment bestimmt werden.

In einem Schritt 650 wird eine aerodynamische Turmschwingungsleistung $P_{AT}$ auf Grundlage einer Differenz der scheinbaren Windleistung $P_{scheinbar}$ und der reinen Windleistung $P_{wind}$ bestimmt. Analog ist die Bestimmung eines aerodynamischen Turmschwindungsmomentes für die scheinbaren Windmomente bzw. reinen Windmomente möglich.

In einem Schritt 660 wird die Windenergieanlage 100 unter Verwendung der aerodynamischen Turmschwingungsleistung $P_{AT}$ geregelt, beispielsweise derart, wie es mit Verweis auf Fig. 4 beschrieben ist.

**Patentansprüche**

1. Verfahren (600) zum Betreiben einer Windenergieanlage (100), wobei die Windenergieanlage (100) einen Turm (102) mit darauf wirkenden äußeren Turmlasten und einen aerodynamischen Rotor (106) mit in ihrem Pitchwinkel verstellbaren Rotorblättern (108), der einen Rotorschub erzeugt, aufweist, wobei das Verfahren (600) die folgenden Schritte umfasst:

   - Bestimmen (610) einer Geschwindigkeit eines Turmkopfes ($v_{TK}$) des Turms und/oder einer Gondel der Windenergieanlage (100),
   - Bestimmen (620) einer absoluten Windgeschwindigkeit ($v_w$) im Bereich der Windenergieanlage (100),
   - Bestimmen (630) einer reinen Windleistung ($P_{wind}$) auf den Rotor auf Grundlage der absoluten Windgeschwindigkeit ($v_w$);
   - Bestimmen (640) einer scheinbaren Windleistung ($P_{scheinbar}$) auf den Rotor auf Grundlage der Geschwindigkeit des Turmkopfes und/oder der Gondel;
   - Bestimmen (650) einer aerodynamischen Turmschwingungsleistung ($P_{AT}$) auf Grundlage einer Differenz der scheinbaren Windleistung ($P_{scheinbar}$) und der reinen Windleistung ($P_{wind}$); und
   - Regeln (660) der Windenergieanlage unter Verwendung der aerodynamischen Turmschwingungsleistung ($P_{AT}$).

2. Verfahren (600) zum Betreiben einer Windenergieanlage (100), wobei die Windenergieanlage (100) einen Turm (102) mit darauf wirkenden äußeren Turmlasten und einen aerodynamischen Rotor (106) mit in ihrem Pitchwinkel verstellbaren Rotorblättern (108), der einen Rotorschub erzeugt, aufweist, wobei das Verfahren die folgenden Schritte umfasst:

   - Bestimmen (610) einer Geschwindigkeit eines Turmkopfes ($v_{TK}$) des Turms und/oder einer Gondel der Windenergieanlage (100),
   - Bestimmen (620) einer absoluten Windgeschwindigkeit ($v_w$) im Bereich der Windenergieanlage,
   - Bestimmen (630) eines reinen Windmoments auf den Rotor auf Grundlage der absoluten Windgeschwindigkeit ($v_w$);
   - Bestimmen (640) eines scheinbaren Windmoments auf den Rotor auf Grundlage der Geschwindigkeit des Turmkopfes;
   - Bestimmen (650) eines aerodynamischen Turmschwingungsmoments auf Grundlage einer Differenz des scheinbaren Windmoments und des reinen Windmoments; und
   - Regeln (660) der Windenergieanlage (100) unter Verwendung des aerodynamischen Turmschwingungsmoments.

3. Verfahren (600) nach Anspruch 1 oder 2, wobei das Regeln der Windenergieanlage ein Korrigieren einer Rotorbeschleunigung umfasst, wobei das Verfahren ferner aufweist:

   - Korrigieren der Rotorbeschleunigung unter Verwendung der aerodynamischen Turmschwingungsleistung bzw. des aerodynamischen Turmschwingungsmoments.

4. Verfahren (600) nach einem der vorstehenden Ansprüche, wobei das Regeln der Windenergieanlage ein Korrigieren einer Leistung des Rotors mit der aerodynamischen Turmschwingungsleistung bzw. des aerodynamischen Turmschwingungsmoments und ein Regeln der Windenergieanlage unter Verwendung der korrigierten Leistung umfasst.

5. Verfahren (600) nach einem der vorstehenden Ansprüche, wobei der Schritt des Regelns der Windenergieanlage mittels einer Leistungsregelung, einer Drehmomentregelung und/oder einer Drehzahlregelung der Windenergieanlage (100) erfolgt, insbesondere durch Blattwinkelverstellung und/oder durch eine Vorgabe des Generatormoments.

6. Verfahren (600) nach einem der vorstehenden Ansprüche, wobei die Leistung eine Beschleunigungsleistung des Rotors oder eine gesamte aerodynamische Leistung des Rotors umfasst bzw. das Moment ein Beschleunigungsmoment des Rotors oder ein gesamtes aerodynamisches Moment des Rotors umfasst.

7. Verfahren (600) nach einem der vorstehenden Ansprüche, wobei die Leistung bzw. das Moment des Rotors um die bzw. das mit einem Faktor multiplizierte aerodynamische Turmschwingungsleistung bzw. Turmschwingungsmoment korrigiert wird, wobei der Multiplikationsfaktor zwischen 0,5 und 5, vorzugsweise zwischen 1 und 4 beträgt.

8. Regler (200, 300) für eine Windenergieanlage (100) mit einem aerodynamischen Rotor (106) mit wenigstens einem Rotorblatt (108), wobei der Regler (300) dazu ausgebildet ist, eine Drehzahl (N) des Rotors (106) der Windenergieanlage (100) zu regeln, wobei

   der Regler (200, 300) dazu ausgebildet ist, ein Eingangssignal zu erhalten, das eine Drehzahländerung, eine Drehzahlbeschleunigung, eine Funktion der Drehzahländerung und/oder eine Funktion der Drehzahlbeschleunigung umfasst,
   wobei der Regler (200, 300) dazu ausgebildet ist, die Windenergieanlage (100) gemäß einem Verfahren (600) nach einem der vorstehenden Ansprüche zu betreiben.

9. Regler (300) nach Anspruch 8, wobei

   der Regler (300) als Kaskadenregelung ausgebildet ist und einen äußeren Regelkreis (310) und einen inneren Regelkreis (350) aufweist, wobei
   der innere Regelkreis das Eingangssignal erhält.

10. Regler (300) nach Anspruch 9, wobei
    eine Regelgröße des äußeren Regelkreises als Führungsgröße des inneren Regelkreises vorgesehen ist und der äußere Regelkreis dazu ausgebildet ist, eine Begrenzung der Regelgröße, insbesondere der Drehzahländerung, der Drehzahlbeschleunigung, der Funktion der Drehzahländerung und/oder der Funktion der Drehzahlbeschleunigung, vorzugeben.

11. Regler (300) nach einem der Ansprüche 9 bis 10, wobei
der äußere Regelkreis (350) eine Abweichung einer Ist-Drehzahl des Rotors von einer Soll-Drehzahl des Rotors (106) als Regelabweichung bestimmt.

12. Regler (300) nach einem der Ansprüche 9 bis 11, wobei

der äußere Regelkreis (310) einen Sollwert einer Leistung oder eines Momentes als Stellgröße erzeugt, wobei
der Sollwert der Leistung insbesondere nach oben und unten unsymmetrisch begrenzt ist, wobei
die Leistung eine Rotorbeschleunigungsleistung umfasst,
wobei die Rotorbeschleunigungsleistung auf eine Nennleistung der Windenergieanlage (100), insbesondere auf höchstens 40%, vorzugsweise höchstens 30% und besonders bevorzugt höchstens 20% der Nennleistung der Windenergieanlage (100), begrenzt ist.

13. Regler (300) nach einem der Ansprüche 8 bis 12, wobei

der Regler (300) ferner eine Berechnungskomponente (380) aufweist, die dazu eingerichtet ist, aus einer Änderung einer gemessenen Ist-Drehzahl der Windenergieanlage unter Verwendung der Rotorträgheit eine Rotorbeschleunigungsleistung zu bestimmen und/oder wobei
der Regler ferner eine Vorsteuerung zum Vorsteuern eines Pitchwinkels wenigstens eines Rotorblattes aufweist, die dazu eingerichtet ist, parallel zu dem inneren Regelkreis einen Pitchwinkel und/oder eine Änderungsrate des Pitchwinkels vorzugeben.

14. Windenergieanlage (100) mit einem Regler (300) nach einem der Ansprüche 8 bis 13.

15. Windpark mit mehreren Windenergieanlagen nach Anspruch 14.

**Claims**

1. A method (600) for operating a wind turbine (100), wherein the wind turbine (100) has a tower (102) with external tower loads acting thereon and has an aerodynamic rotor (106) with rotor blades (108) which are adjustable in terms of their pitch angle, which rotor generates rotor thrust, wherein the method (600) comprises the following steps:

   - determining (610) a speed of a tower head ($v_{TH}$) of the tower and/or of a nacelle of the wind turbine (100),
   - determining (620) an absolute wind speed ($v_w$) in the region of the wind turbine (100),
   - determining (630) a pure wind power ($P_{wind}$) on the rotor on the basis of the absolute wind speed ($v_w$);
   - determining (640) an apparent wind power ($P_{apparent}$) on the rotor on the basis of the speed of the tower head and/or of the nacelle;
   - determining (650) an aerodynamic tower vibration power ($P_{AT}$) on the basis of a difference between the apparent wind power ($P_{apparent}$) and the pure wind power ($P_{wind}$); and
   - performing feedback control (660) of the wind turbine using the aerodynamic tower vibration power ($P_{AT}$).

2. A method (600) for operating a wind turbine (100), wherein the wind turbine (100) has a tower (102) with external tower loads acting thereon and has an aerodynamic rotor (106) with rotor blades (108) which are adjustable in terms of their pitch angle, which rotor generates rotor thrust, wherein the method comprises the following steps:

   - determining (610) a speed of a tower head ($v_{TH}$) of the tower and/or of a nacelle of the wind turbine (100),
   - determining (620) an absolute wind speed ($v_w$) in the region of the wind turbine,
   - determining (630) a pure wind moment on the rotor on the basis of the absolute wind speed ($v_w$);
   - determining (640) an apparent wind moment on the rotor on the basis of the speed of the tower head;
   - determining (650) an aerodynamic tower vibration moment on the basis of a difference between the apparent wind moment and the pure wind moment; and
   - performing feedback control (660) of the wind turbine (110) using the aerodynamic tower vibration moment.

3. The method (600) as claimed in claim 1 or 2, wherein the feedback control of the wind turbine comprises correcting a rotor acceleration, wherein the method furthermore includes:

- correcting the rotor acceleration using the aerodynamic tower vibration power or the aerodynamic tower vibration moment.

**4.** The method (600) as claimed in any one of the preceding claims, wherein the feedback control of the wind turbine comprises correcting a power of the rotor with the aerodynamic tower vibration power or the aerodynamic tower vibration moment, and performing feedback control of the wind turbine using the corrected power.

**5.** The method (600) as claimed in any one of the preceding claims, wherein the step of performing feedback control of the wind turbine is performed by means of power feedback control, torque feedback control and/or rotational speed feedback control of the wind turbine (100), in particular by blade angle adjustment and/or by specification of the generator torque.

**6.** The method (600) as claimed in any one of the preceding claims, wherein the power comprises an acceleration power of the rotor or a total aerodynamic power of the rotor, or the moment comprises an acceleration moment of the rotor or a total aerodynamic moment of the rotor.

**7.** The method (600) as claimed in any one of the preceding claims, wherein the power or the moment of the rotor is corrected by the aerodynamic tower vibration power or tower vibration moment, respectively, multiplied by a factor, wherein the multiplication factor is between 0.5 and 5, preferably between 1 and 4.

**8.** A controller (200, 300) for a wind turbine (100) having an aerodynamic rotor (106) with at least one rotor blade (108), wherein the controller (300) is configured to perform feedback control of a rotational speed (N) of the rotor (106) of the wind turbine (100), wherein

the controller (200, 300) is configured to receive an input signal which comprises a rotational speed change, a rotational speed acceleration, a function of the rotational speed change and/or a function of the rotational speed acceleration,

wherein the controller (200, 300) is configured to operate the wind turbine (100) in accordance with a method (600) as claimed in any one of the preceding claims.

**9.** The controller (300) as claimed in claim 8, wherein

the controller (300) is configured as a cascade feedback controller and has an outer feedback control loop (310) and an inner feedback control loop (350), wherein
the inner feedback control loop receives the input signal.

**10.** The controller (300) as claimed in claim 9, wherein
a controlled variable of the outer feedback control loop is provided as a reference variable of the inner feedback control loop, and the outer feedback control loop is configured to specify a limitation of the controlled variable, in particular of the rotational speed change, of the rotational speed acceleration, of the function of the rotational speed change and/or of the function of the rotational speed acceleration.

**11.** The controller (300) as claimed in any one of claims 9 to 10, wherein
the outer feedback control loop (350) determines a deviation of an actual rotational speed of the rotor from a setpoint rotational speed of the rotor (106) as a control deviation.

**12.** The controller (300) as claimed in any one of claims 9 to 11, wherein

the outer feedback control loop (310) generates a setpoint value of a power or of a moment as a manipulated variable, wherein the setpoint value of the power is in particular upwardly and downwardly asymmetrically limited, wherein
the power comprises a rotor acceleration power,
wherein the rotor acceleration power is limited to a nominal power of the wind turbine (100), in particular to at most 40%, preferably at most 30% and particularly preferably at most 20% of the nominal power of the wind turbine (100).

**13.** The controller (300) as claimed in any one of claims 8 to 12, wherein

the controller (300) furthermore has a calculation component (380) which is configured to determine a rotor acceleration power from a change in a measured actual rotational speed of the wind turbine using the rotor inertia, and/or wherein
the controller furthermore has a feedforward controller for the feedforward control of a pitch angle of at least one rotor blade, which feedforward controller is configured to specify a pitch angle and/or a rate of change of the pitch angle in parallel with respect to the inner feedback control loop.

**14.** A wind turbine (100) having a controller (300) as claimed in any one of claims 8 to 13.

**15.** A wind farm having multiple wind turbines as claimed in claim 14.

**Revendications**

**1.** Procédé (600) de fonctionnement d'une éolienne (100), dans lequel l'éolienne (100) présente une tour (102) avec des charges de tour extérieures agissant sur celle-ci et un rotor (106) aérodynamique avec des pales de rotor (108) réglables dans leur angle de calage qui génère une poussée de rotor, dans lequel le procédé (600) comprend les étapes suivantes :

- la détermination (610) d'une vitesse d'une tête de tour ($v_{TK}$) de la tour et/ou d'une nacelle de l'éolienne (100),
- la détermination (620) d'une vitesse du vent ($v_w$) absolue dans la zone de l'éolienne (100),
- la détermination (630) d'une puissance du vent pure ($P_{vent}$) sur le rotor sur la base de la vitesse du vent ($v_w$) absolue ;
- la détermination (640) d'une puissance du vent visible ($P_{visible}$) sur le rotor sur la base de la vitesse de la tête de tour et/ou de la nacelle ;
- la détermination (650) d'une puissance d'oscillation de tour ($P_{AT}$) aérodynamique sur la base d'une différence entre la puissance du vent visible ($P_{visible}$) et la puissance du vent pure ($P_{vent}$) ; et
- la régulation (660) de l'éolienne en utilisant la puissance d'oscillation de tour ($P_{AT}$) aérodynamique.

**2.** Procédé (600) de fonctionnement d'une éolienne (100), dans lequel l'éolienne (100) présente une tour (102) avec des charges de tour extérieures agissant sur celle-ci et un rotor (106) aérodynamique avec des pales de rotor (108) réglables dans leur angle de calage, qui génère une poussée de rotor, dans lequel le procédé comprend les étapes suivantes :

- la détermination (610) d'une vitesse d'une tête de tour ($v_{TK}$) de la tour et/ou d'une nacelle de l'éolienne (100),
- la détermination (620) d'une vitesse du vent ($v_w$) absolue dans la zone de l'éolienne,
- la détermination (630) d'un couple du vent pur sur le rotor sur la base de la vitesse du vent ($v_w$) absolue ;
- la détermination (640) d'un couple du vent visible sur le rotor sur la base de la vitesse de la tête de tour ;
- la détermination (650) d'un couple d'oscillation de tour aérodynamique sur la base d'une différence de la puissance du vent visible et de la puissance du vent pure ; et
- la régulation (660) de l'éolienne (100) en utilisant le couple d'oscillation de tour aérodynamique.

**3.** Procédé (600) selon la revendication 1 ou 2, dans lequel la régulation de l'éolienne comprend une correction d'une accélération de rotor, dans lequel le procédé présente de plus :

- la correction de l'accélération de rotor en utilisant la puissance d'oscillation de tour aérodynamique ou le couple d'oscillation de tour aérodynamique.

**4.** Procédé (600) selon l'une quelconque des revendications précédentes, dans lequel la régulation de l'éolienne comprend une correction d'une puissance du rotor avec la puissance d'oscillation de tour aérodynamique ou du couple d'oscillation de tour aérodynamique et une régulation de l'éolienne en utilisant la puissance corrigée.

**5.** Procédé (600) selon l'une quelconque des revendications précédentes, dans lequel l'étape de la régulation de l'éolienne est effectuée au moyen d'une régulation de puissance, d'une régulation de couple et/ou d'une régulation de vitesse de rotation de l'éolienne (100), en particulier par réglage de l'angle de pale et/ou par une prédétermination du couple de générateur.

**6.** Procédé (600) selon l'une quelconque des revendications précédentes, dans lequel la puissance comprend une puissance d'accélération du rotor ou une puissance aérodynamique entière du rotor ou le couple comprend un couple d'accélération du rotor ou un couple aérodynamique entier du rotor.

**7.** Procédé (600) selon l'une quelconque des revendications précédentes, dans lequel la puissance ou le couple du rotor est corrigé de la puissance d'oscillation de tour ou du couple d'oscillation de tour aérodynamique multiplié par un facteur, dans lequel le facteur de multiplication est compris entre 0,5 et 5, de préférence entre 1 et 4.

**8.** Régulateur (200, 300) pour une éolienne (100) avec un rotor (106) aérodynamique avec au moins une pale de rotor (108), dans lequel le régulateur (300) est réalisé afin de réguler une vitesse de rotation (N) du rotor (106) de l'éolienne (100), dans lequel le régulateur (200, 300) est réalisé afin de recevoir un signal d'entrée qui comprend une modification de vitesse de rotation, une accélération de vitesse de rotation, une fonction de la modification de vitesse de rotation et/ou une fonction de l'accélération de vitesse de rotation,
dans lequel le régulateur (200, 300) est réalisé afin de faire fonctionner l'éolienne (100) selon un procédé (600) selon l'une quelconque des revendications précédentes.

**9.** Régulateur (300) selon la revendication 8, dans lequel le régulateur (300) est réalisé comme régulation en cascade et présente un circuit de régulation (310) extérieur et un circuit de régulation (350) intérieur, dans lequel le circuit de régulation intérieur reçoit le signal d'entrée.

**10.** Régulateur (300) selon la revendication 9, dans lequel
une grandeur de régulation du circuit de régulation extérieur est prévue comme grandeur de guidage du circuit de régulation intérieur et le circuit de régulation extérieur est réalisé afin de prédéterminer une limitation de la grandeur de régulation, en particulier la modification de vitesse de rotation, l'accélération de vitesse de rotation, la fonction de la modification de vitesse de rotation et/ou la fonction de l'accélération de vitesse de rotation.

**11.** Régulateur (300) selon l'une quelconque des revendications 9 à 10, dans lequel
le circuit de régulation (350) extérieur détermine un écart d'une vitesse de rotation réelle du rotor par rapport à une vitesse de rotation de consigne du rotor (106) comme écart de régulation.

**12.** Régulateur (300) selon l'une quelconque des revendications 9 à 11, dans lequel

le circuit de régulation (310) extérieur génère une valeur de consigne d'une puissance ou d'un couple comme grandeur de réglage, dans lequel la valeur de consigne de la puissance est limitée de manière non symétrique en particulier vers le haut et le bas, dans lequel la puissance comprend une puissance d'accélération de rotor, dans lequel la puissance d'accélération de rotor est limitée à une puissance nominale de l'éolienne (100), en particulier au plus à 40 %, de préférence au plus à 30 % et de manière particulièrement préférée au plus à 20 % de la puissance nominale de l'éolienne (100).

**13.** Régulateur (300) selon l'une quelconque des revendications 8 à 12, dans lequel

le régulateur (300) présente de plus un composant de calcul (380) qui est conçu afin de déterminer, à partir d'une modification d'une vitesse de rotation réelle mesurée de l'éolienne en utilisant l'inertie de rotor, une puissance d'accélération de rotor et/ou dans lequel
le régulateur présente de plus une précommande pour la précommande d'un angle de calage au moins d'une pale de rotor qui est conçue afin de prédéterminer, parallèlement au circuit de régulation intérieur, un angle de calage et/ou un taux de modification de l'angle de calage.

**14.** Eolienne (100) avec un régulateur (300) selon l'une quelconque des revendications 8 à 13.

**15.** Parc éolien avec plusieurs éoliennes selon la revendication 14.

Fig. 1

Fig. 2

Fig. 3

Fig. 4

Fig. 5

EP 3 931 438 B1

600

610

620

630

640

650

660

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3308564 A1
- EP 2115299 B1
- EP 2063110 B1
- DE 102017105165 A1
- US 20090250932 A1
- US 20100063769 A1
- US 20110316277 A1
- US 20120056427 A1
- US 20140297052 A1
- US 20150354532 A1
- EP 2679810 A2
- WO 2008023990 A1